# DEMANDE DE BREVET EUROPEEN

(11) **EP 1 762 370 A1**
(43) Date de publication de la demande: **14.03.2007**
(21) Numéro de dépôt: 05108285.7
(22) Date de dépôt: 09.09.2005
(51) Int. Cl.: B29C 65/78, B65D 35/12, B65D 35/10, B29C 65/02

(54) **Dispositif et procédé pour la fabrication de récipients tubulaires**

(71) Demandeur: Aisapack Holding SA, 1896 Vouvry (CH)
(72) Inventeur: Sander, Engelbert, 1896 Vouvry (CH)
(74) Mandataire: Grosfillier, Philippe

(57) **Abrégé**

Dispositif pour la fabrication de récipients tubulaires de matière plastique (1) constitués de trois éléments distincts :
- un corps flexible de forme tubulaire (2),
- un fond rigide (3),
- une pièce supérieure (4) comportant un goulot (8),
ledit dispositif comprenant un mandrin (5) et des moyens (6,7) pour la fixation d'une pièce supérieure (4) et d'un fond (3) sur un corps flexible tubulaire (2), **caractérisé** en ce qu'il est constitué d'au moins une unité de fabrication comprenant une tige-support (9) possédant une extrémité libre (10) munie d'un organe de retenue (11) adapté pour empêcher le déplacement d'un fond de récipient (3) selon une direction, un manchon tubulaire (12) monté coulissant autour de la tige-support (9) et comprenant une extrémité libre (13) disposée du même côté que l'extrémité libre (10) de la tige-support (9), un organe d'entraînement du manchon tubulaire (12), un espace (14) adapté pour le déplacement relatif d'un corps de forme tubulaire (2) autour du manchon tubulaire (12), ledit manchon tubulaire (12) comprenant en outre un organe de saisie de pièce supérieure (15) disposé vers l'extrémité libre (13) du manchon (12), ledit organe de saisie de pièce supérieure (15) comprenant des moyens de fixation et de retenue momentanée (16) d'un ensemble constitué d'une pièce supérieure (4) et d'un fond (3) de récipient (1).

## Description

### Domaine de l'invention

La présente invention se situe dans le domaine des récipients tubulaires en matière plastique qui sont constitués de trois éléments distincts, soit un corps flexible de forme tubulaire, un fond rigide et une pièce supérieure comportant un goulot.
L'invention concerne plus précisément un dispositif et un procédé permettant d'obtenir de tels récipients.

### Etat de la technique

On connaît divers dispositifs permettant de réaliser des récipients tels que décrits dans le chapitre précédent.
Décrits de manière succincte, ces dispositifs comprennent un premier type de mandrin qui supporte le corps de forme tubulaire et sur lequel on fixe la pièce supérieure qui contient le goulot. L'ensemble constitué de ces deux éléments est ensuite acheminé sur un deuxième type de mandrin sur lequel on fixe le fond.
Les dispositifs de l'état de la technique sont cependant relativement complexes dans leur structure. De plus, le transfert d'un récipient en formation d'un type de mandrin à l'autre ralentit considérablement la durée de fabrication du récipient.
Par ailleurs, le positionnement du fond et/ou de la pièce supérieure est délicat à réaliser.
II existe donc un besoin de simplifier les dispositifs de l'état de la technique et de raccourcir la durée de fabrication d'un récipient.

### Exposé général de l'invention

Le problème que la présente invention se propose de résoudre réside dans la relative complexité des dispositifs de l'état de la technique et de la relative longue durée de fabrication d'un récipient.

Dans l'invention, la solution du problème précité consiste à n'utiliser qu'un seul type de mandrin pour réaliser à la fois la fixation de la pièce supérieure et la fixation du fond sur le corps tubulaire.

Plus précisément, le dispositif selon l'invention comprend un mandrin et des moyens pour la fixation d'une pièce supérieure munie d'un goulot et d'un fond sur un corps flexible tubulaire. Le dispositif se caractérise par le fait qu'il est constitué d'au moins une unité de fabrication comprenant une tige-support possédant une extrémité libre munie d'un organe de retenue adapté pour empêcher le déplacement d'un fond de récipient selon une direction, un manchon tubulaire monté coulissant autour de la tige-support et comprenant une extrémité libre disposée du même côté que l'extrémité libre de la tige-support, un organe d'entraînement linéaire du manchon tubulaire, un espace adapté pour le déplacement relatif d'un corps de forme tubulaire autour du manchon tubulaire, ledit manchon tubulaire comprenant en outre un organe de saisie de pièce supérieure disposé vers l'extrémité libre du manchon, ledit organe de saisie de pièce supérieure comprenant des moyens de fixation et de retenue momentanée d'un ensemble constitué d'une pièce supérieure et d'un fond de récipient.

L'organe de saisie de pièce supérieure peut être de n'importe quel type. Selon un mode de réalisation de l'invention, les moyens de fixation et de retenue sont constitués d'un pas de vis.

Avantageusement, l'organe d'entraînement du manchon tubulaire est du type pneumatique mais tout autre type d'entraînement approprié peut être utilisé.

De préférence, le dispositif comprend plusieurs unités de fabrication.
Selon un mode de réalisation, les unités de fabrication sont disposées le long d'un cercle.

Selon une variante de l'invention, la pièce supérieure et le fond sont initialement fixés l'un à l'autre, ce qui permet de les introduire dans le dispositif en une seule opération.
La fixation initiale du fond à la pièce supérieure offre en outre d'autres avantages.
L'ensemble ainsi constitué est plus rigide que le fond pris isolément, ce qui permet d'augmenter la stabilité du fond lors de son soudage au corps tubulaire.

Inversement, si le tond n'était pas fixé initialement à la pièce supérieure, un renforcement de celui-ci serait nécessaire, p.ex. en ajoutant des ailettes latérales.
Le fond serait donc plus lourd, plus complexe à réaliser et donc plus onéreux.

### Exposé détaillé de l'invention

L'invention est décrite plus en détail ci-après au moyen d'exemples illustrés par les figures suivantes :
La figure 1 présente les éléments séparés d'un récipient pouvant être utilisé avec le dispositif selon l'invention.
La figure 2 présente les éléments de la figure lorsqu'ils sont assemblés.
La figure 3 présente un ensemble constitué d'un fond et d'une pièce supérieure.
La figure 4 présente une coupe longitudinale d'unité de fabrication selon l'invention.
La figure 5 montre la fixation de l'ensemble de la figure 3 sur l'unité de fabrication.
La figure 6 montre le chargement d'un corps tubulaire.
La figure 7 illustre le soudage du fond sur le corps tubulaire.
La figure 8 montre le déplacement de la pièce supérieure vers sa position finale.
La figure 9 illustre le soudage de la pièce supérieure sur le corps tubulaire.
La figure 10 montre le début du retrait d'un récipient de l'unité de fabrication.
La figure 11 montre la fin du retrait d'un récipient de l'unité de fabrication.
La figure 12 est une vue frontale simplifiée d'un plateau tournant comportant plusieurs unités de fabrication.

### Liste des références numériques :

1. Récipient tubulaire
2. Corps tubulaire
3. Fond rigide
4. Pièce supérieure
5. Mandrin
6. Elément de fixation de pièce supérieure sur le corps tubulaire
7. Elément de fixation de fond sur le corps tubulaire
8. Goulot
9. Tige-support
10. Extrémité libre de la tige-support
11. Organe de retenue
12. Manchon tubulaire
13. Extrémité libre du manchon tubulaire
14. Espace pour recevoir un corps tubulaire
15. Organe de saisie de pièce supérieure
16. Elément de fixation de pièce supérieure
17. Plateau tournant
18. Mécanisme de fixation fond-pièce supérieure
19. Conduit pour le passage de fluide
20. Orifice d'aspiration/expiration
21. Espace de logement de fluide

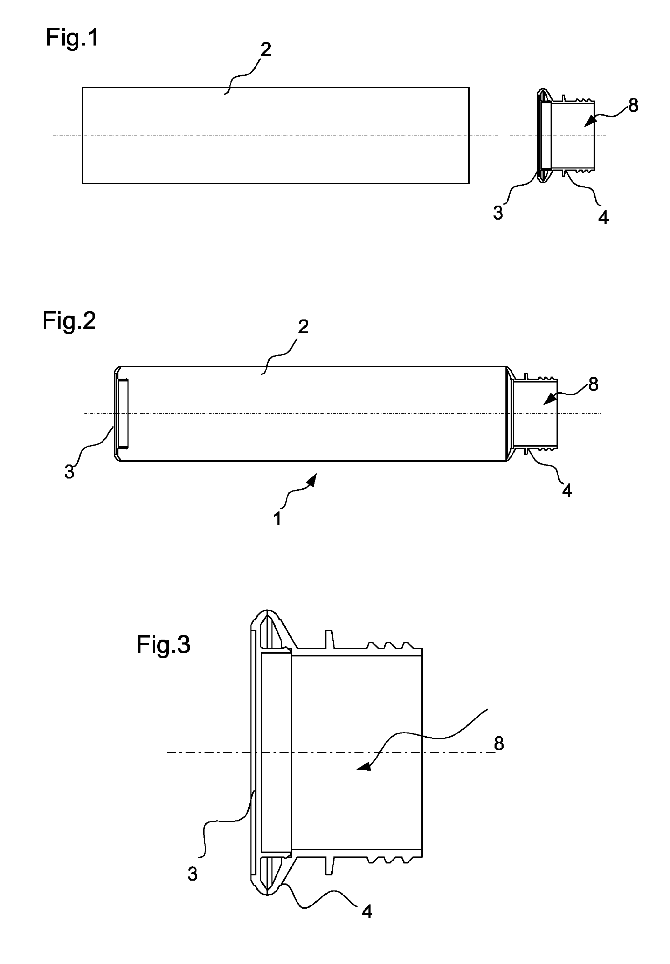

La figure 1 illustre les trois éléments constitutifs d'un récipient **1** pouvant être utilisés avec le dispositif selon l'invention, à savoir un corps tubulaire flexible **2,** p.ex. un tube laminé, un fond rigide **3** et une pièce supérieure **4** comportant un goulot **8.** Dans une première phase, le fond **3** est fixé à la pièce supérieure **4** au moyen d'un mécanisme **18** du type snap-fit (voir figure 3). Tout autre système de fixation momentanée peut bien entendu être utilisé. Selon une variante non-illustrée de l'invention, la pièce supérieure et le fond sont fabriqués initialement en une seule pièce par injection, les deux éléments étant ensuite séparés au cours du procédé de fabrication, p.ex. par cassure de liaisons temporaires. Comme on le verra par la suite, le fond **3** est ensuite séparé de la pièce supérieure **4** lors du procédé de fabrication. La figure 2 montre un récipient **1** dans sa configuration au terme du procédé de fabrication. Le fond **3** a été soudé au niveau de l'extrémité inférieure du corps tubulaire **2** et la pièce supérieure **4** a été soudée au niveau de l'extrémité supérieure du corps tubulaire **2.**

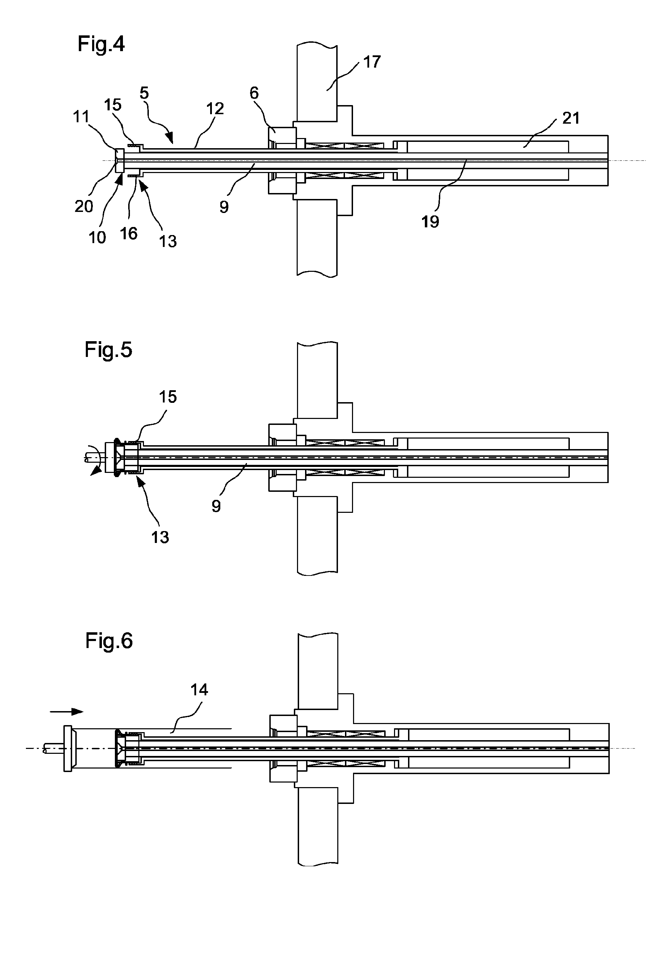

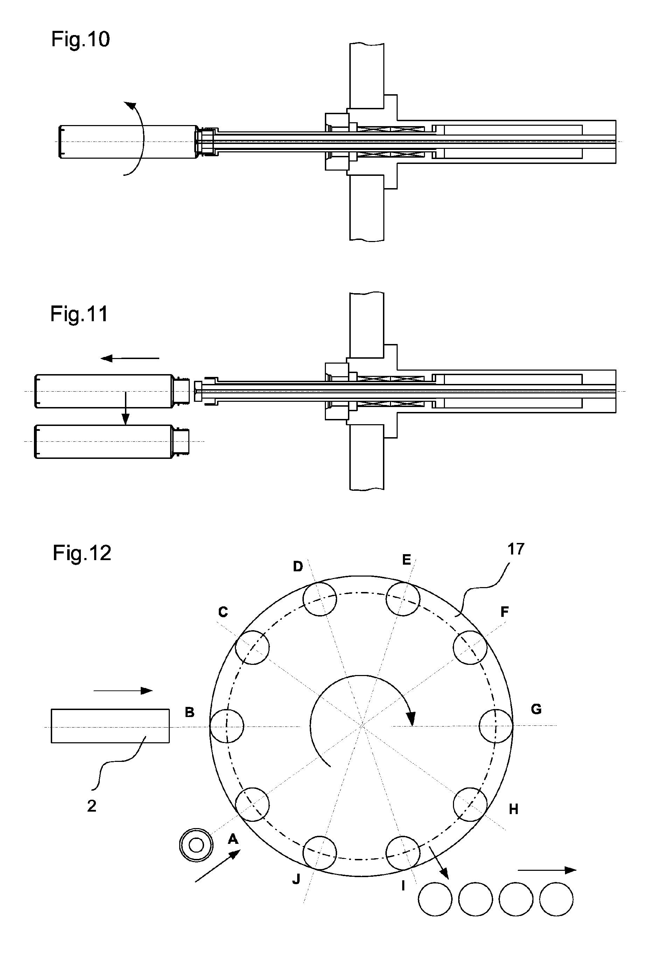

La figure 4 montre une unité de fabrication fixée à un plateau tournant 17 (voir figure 12). Elle est constituée d'une tige-support **9** entourée d'un manchon **12** monté coulissant sur la tige-support **9** et comportant une extrémité libre **13** munie d'un organe **15** permettant de saisir et fixer une pièce supérieure **4.** La tige-support **9** comporte un conduit interne **19** permettant d'acheminer un fluide, un gaz de préférence, vers ou en provenance de l'extrémité libre **10** de la tige-support **9.** L'extrémité libre **10** de la tige-support **9** comporte un organe de retenue **11** comprenant un orifice **20** au travers duquel débouche le conduit interne **19.** La géométrie de l'orifice **20** (un cône évasé de préférence), est choisie d'assurer une bonne adhésion, par aspiration, du fond **3** sur l'organe de retenue **11.**
Au niveau du plateau tournant **17,** un élément de fixation de pièce supérieure **6** comprenant un système de chauffage, p.ex. HF, entoure l'ensemble constitué de la tige-support 9 et du manchon **12.**

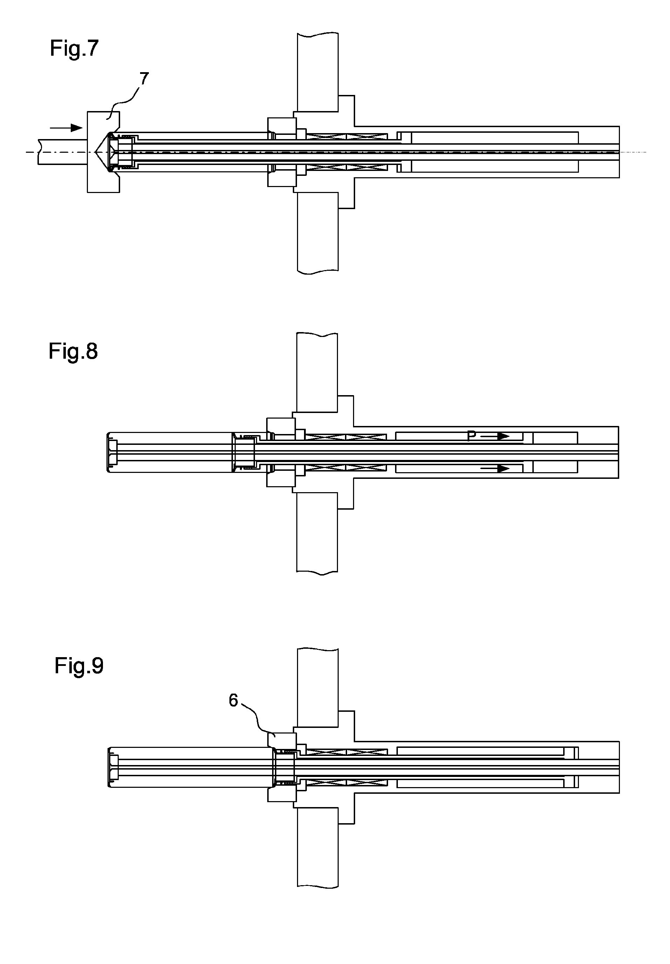

Les figures 5 à 11 illustrent différentes étapes de fabrication d'un récipient 1 au moyen de l'unité de fabrication présentée sur la figure 1.
Dans une première étape (voir figure 5), on fixe un ensemble pièce supérieure **4** - fond **3** sur l'extrémité libre **13** du manchon **12.** La fixation se fait par vissage du col de la pièce supérieure dans un pas de vis **16.**
Dans une deuxième étape (voir figure 6), on charge un corps tubulaire **2** autour du manchon **12.** Un espace **14** est prévu à cet effet. On notera qu'au terme de cette étape, l'ensemble pièce supérieure **4 -** fond **3** se situe dans la partie inférieure du corps tubulaire **2** (tout à gauche sur la figure).
Dans une troisième étape (figure 7), on positionne un système de soudage 7 vers l'extrémité inférieur du corps tubulaire **2** et l'on soude le fond **3** sur le corps tubulaire **2.**
Dans une quatrième étape (figure 8) on déplace le manchon **12** en direction de l'extrémité supérieure du corps tubulaire **2.** Cette opération entraîne le déplacement de la pièce supérieure **4** qui est fixée au manchon **12** mais pas celui du fond qui reste en place au moyen de l'organe de retenue **11.**

Selon une variante non-illustrée de l'invention, la quatrième étape a lieu avant la troisième étape.

Dans une cinquième étape (figure 9), une fois que la pièce supérieure **4** a atteint sa position finale par rapport au corps tubulaire **2,** on la soude à ce dernier au moyen de l'élément de fixation **6** qui comporte un système de soudage.

Dans une sixième étape (figure 10), on dévisse la pièce supérieure **4** du manchon **12.**

Enfin (figure 11), on retire le récipient **1** de l'unité de fabrication.

La figure 12 montre une vue schématique d'un plateau tournant comportant plusieurs unités de fabrication. Les unités de fabrication sont regroupées en stations, chaque station effectuant une des six étapes décrites plus haut.
Dans l'exemple illustré, deux corps tubulaires **2** sont chargés simultanément sur le plateau tournant **17.**

Sur la figure 12, chaque station est représentée par une lettre, conformément à la liste reproduite ci-dessous :
A Charge pièce supérieure/fond rigid
B Charge corps tubulaire
C Positionnement corps tubulaire
D Prétraitement du fond par air chaud
E Soudage par haute fréquence du fond
F Soudage par haute fréquence de la pièce supérieure
G Soudage par haute fréquence de la pièce supérieure
H Soudage par haute fréquence de la pièce supérieure
I Déchargement du récipient
J Station libre (Contôle de déchargement)

## Revendications

1. Dispositif pour la fabrication de récipients tubulaires de matière plastique
(1) constitués de trois éléments distincts :
- un corps flexible de forme tubulaire (2),
- un fond rigide (3),
- une pièce supérieure (4) comportant un goulot (8),
ledit dispositif comprenant un mandrin (5) et des moyens (6,7) pour la fixation d'une pièce supérieure (4) et d'un fond (3) sur un corps flexible tubulaire (2), **caractérisé en ce qu'**il est constitué d'au moins une unité de fabrication comprenant une tige-support (9) possédant une extrémité libre (10) munie d'un organe de retenue (11) adapté pour empêcher le déplacement d'un fond de récipient (3) selon une direction, un manchon tubulaire (12) monté coulissant autour de la tige-support (9) et comprenant une extrémité libre (13) disposée du même côté que l'extrémité libre (10) de la tige-support (9), un organe d'entraînement linéaire du manchon tubulaire (12), un espace (14) adapté pour le déplacement relatif d'un corps de forme tubulaire (2) autour du manchon tubulaire (12), ledit manchon tubulaire (12) comprenant en outre un organe de saisie de pièce supérieure(15) disposé vers l'extrémité libre (13) du manchon (12), ledit organe de saisie de pièce supérieure (15) comprenant des moyens de fixation et de retenue momentanée (16) d'un ensemble constitué d'une pièce supérieure (4) et d'un fond (3) de récipient (1).

2. Dispositif selon la revendication 1 où les moyens de fixation et de retenue momentanée (16) sont un pas de vis (16).

3. Dispositif selon la revendication 1 ou 2 **caractérisé en ce que** l'organe d'entraînement du manchon tubulaire (12) est du type pneumatique.

4. Dispositif selon l'une quelconque des revendications précédentes comprenant plusieurs unités de fabrication adjacentes disposées le long d'un cercle.

5. Dispositif selon la revendication précédente comprenant un élément en forme de plateau tournant (17) comportant un ensemble d'unités de fabrication disposées selon une direction perpendiculaire au plan du plateau tournant (17).

6. Dispositif selon la revendication précédente comprenant plusieurs stations de travail, chaque station étant constituée d'au moins une unité de fabrication.

7. Ensemble constitué d'un fond rigide (3) et d'une pièce supérieure (3) comportant un goulot (8), ledit ensemble étant adapté pour être utilisé avec le dispositif selon l'une quelconque des revendications précédentes, **caractérisé en ce qu'**il comprend un mécanisme de fixation (18) adapté pour fixer momentanément le fond (3) à la pièce supérieure (4) ou vice-versa.

8. Ensemble selon la revendication précédente **caractérisé en ce que** le mécanisme de fixation (18) est du type snap-fit.

9. Procédé de fabrication de récipients tubulaires de matière plastique (1) constitués de trois éléments distincts :
- un corps flexible de forme tubulaire (2),
- un fond rigide (3),
- une pièce supérieure (4) comportant un goulot (8),
ledit procédé comprenant les étapes successives suivantes :
- fixation d'une pièce supérieure (4) sur l'extrémité libre (13) d'un manchon tubulaire (12) monté coulissant sur une tige-support (9),
- fixation d'un fond (3) au niveau d'un organe de retenue (11) disposé sur l'extrémité libre (10) de la tige-support (9),
- chargement d'un corps tubulaire (2) autour du manchon tubulaire (12),
- soudage du fond (3) sur le corps tubulaire (2),
- retenue du fond (3) et entraînement de la pièce supérieure (4) par déplacement du manchon tubulaire (12) en direction de l'extrémité du corps (2) qui est opposée à celle où se trouve le fond (3),
- soudage de la pièce supérieure (4) sur le corps tubulaire (2),
- retrait du récipient (1) de l'ensemble tige-support (9)/manchon tubulaire (12).

10. Procédé selon la revendication 9 **caractérisé en ce que** l'on fixe le fond (3) sur la pièce supérieure (4).

11. Procédé selon la revendication 9 **caractérisé en ce que** l'on fixe le fond (3) sur l'organe de retenue (11).

12. Procédé selon la revendication 11 où l'on fixe le fond (3) par aspiration sur l'organe de retenue (11).

13. Procédé de fabrication de récipients tubulaires de matière plastique (1) constitués de trois éléments distincts :
- un corps flexible de forme tubulaire (2),
- un fond rigide (3),
- une pièce supérieure (4) comportant un goulot (8),
ledit procédé comprenant les étapes successives suivantes :
- fixation du fond rigide (3) sur la pièce supérieure (4),
- fixation de l'ensemble pièce supérieure (4) - fond (3) sur l'extrémité libre (13) d'un manchon tubulaire (12) monté coulissant sur une tige-support (9),
- chargement d'un corps tubulaire (2) autour du manchon tubulaire (12),
- soudage du fond (3) sur le corps tubulaire (2),
- retenue du fond (3) et entraînement de la pièce supérieure (4) par déplacement du manchon tubulaire (12) en direction de l'extrémité du corps (2) qui est opposée à celle où se trouve le fond (3),
- soudage de la pièce supérieure (4) sur le corps tubulaire (2),
- retrait du récipient (1) de l'ensemble tige-support (9) / manchon tubulaire (12).
